**Europäisches Patentamt**

(19) **European Patent Office**

**Office européen des brevets**

(11) Publication number : **0 385 081 B1**

(12) **EUROPEAN PATENT SPECIFICATION**

(45) Date of publication of patent specification :
**11.08.93 Bulletin 93/32**

(51) Int. Cl.$^5$ : **A23D 9/00**, A23C 15/14, A21D 2/16

(21) Application number : **90101038.9**

(22) Date of filing : **19.01.90**

(54) **Dried fat emulsion product and method of producing the same.**

(30) Priority : **09.02.89 US 308278**

(43) Date of publication of application :
**05.09.90 Bulletin 90/36**

(45) Publication of the grant of the patent :
**11.08.93 Bulletin 93/32**

(84) Designated Contracting States :
**AT BE CH DE DK ES FR GB GR IT LI LU NL SE**

(56) References cited :
**GB-A- 1 113 462**
**US-A- 3 968 261**
**US-A- 3 989 852**
**PATENT ABSTRACTS OF JAPAN, vol. 10, no. 161 (C-352)[2217], 10th June 1986; & JP-A-61 15 733 (MIYOSHI YUSHI K.K.) 23-01-1986**

(56) References cited :
**PATENT ABSTRACTS OF JAPAN, vol. 9, no. 108 (C-280)[1831], 11th May 1985; & JP-A-60 2173 (KUNOORU SHIYOKUHIN K.K.) 08-01-1985**

(73) Proprietor : **SOCIETE DES PRODUITS NESTLE S.A.**
**Case postale 353**
**CH-1800 Vevey (CH)**

(72) Inventor : **Burros, Byron**
**12201 Stewarton Drive**
**Northridge, Ca. 91325 (US)**
Inventor : **Einerson, Mark A.**
**25632 Serena Drive**
**Valencia, Ca. 91355 (US)**
Inventor : **Tran, Kha**
**2445 N. Burlingham Place**
**Simi Valley, Ca. 93063 (US)**

EP 0 385 081 B1

## Description

This invention relates to an improved dried fat emulsion product and to the method of producing the improved emulsion product. More particularly, the invention relates to the production of edible dried fat emulsions having improved resistance to oxidation, particularly at elevated temperatures.

Dried fat emulsions have found wide acceptance in numerous convenience food products such as cake mixes, powdered shortenings, dried coffee whiteners, flavorings, topping mixes, sauce mixes, dried beverage mixes, and the like. Typically, as shown in US-A-3 986 261 such dried emulsions are prepared by emulsifying fat or oil in an aqueous dispersion or solution of an edible hydrophilic film forming material, such as proteinaceous materials, hydrocolloid gums, starches, carboxymethylcellulose, and the like, to form an oil-in-water emulsion concentrate which is then dried, such as by spray drying. In the dried emulsion, fat globules are encapsulated by a layer of the film forming material. Such dried fat emulsions provide the advantages of ease of handling and incorporation with other dry ingredients in the preparation of various food products. Moreover, since fats are susceptible to oxidative deterioration in the presence of air, causing development of rancid odor and taste, encapsulation of the fat globules by the film forming material retards rancidity development of the fat and thereby provides the fat containing product with a longer shelf life.

Frequently there is a need for dried fat emulsion products having greater resistance to oxidation, and hence a longer shelf life, than can be obtained by the procedure described above. However, prior procedures intended to produce dried fat emulsions having increased resistance to oxidative deterioration have not been entirely satisfactory. For example, one approach to inhibit the development of oxidative rancidity in dried fat emulsion products has been to use highly saturated fats, such as hydrogenated lauric-containing fats, as the fat component. However, the use of such fats is objectionable due to dietary concerns regarding such highly saturated fats, and difficulty in reconstituting the dried emulsion, particularly in cold water. Another approach has been to incorporate antioxidants, such a butylated hydroxyanisole and/or butylated hydroxytolune in the fat to inhibit the oxidative process. While the use of such antioxidants is effective in extending shelf life, the use of antioxidants adds significantly to the cost of the product and is objectionable to a number of consumers.

The present invention provides a method by which dried fat emulsion products can be produced having increased resistance to oxidation and the development of rancidity, particularly at elevated storage temperatures, without requiring the use of highly saturated fats or antioxidants. In the present invention, an aqueous dispersion of an edible fat or oil, a hydrophilic film forming material, and a carbohydrate, preferably a disaccharide, and water is emulsified to form a liquid oil-in-water emulsion concentrate having a solids content of 25% to 75% in which the fat globules are encapsulated within a continuous layer of the film forming material. After the emulsion has been formed, a second portion of a hydrophilic film forming material is added to the emulsion concentrate in an amount substantially equivalent to the amount of the film forming material contained in the aqueous dispersion, to provide an additional coating layer of film forming material encapsulating the fat globules. This second portion of the film forming material preferably is added to the emulsion concentrate prior to drying, but may, if desired be added to the emulsion concentrate after drying, such as during instantizing of the dried emulsion concentrate. The film forming material used in this second addition may be the same as or different from the film forming material used in forming the initial aqueous dispersion.

It has been found that this second addition of film forming material is surprisingly effective in improving the resistance of dried fat emulsion products to oxidative deterioration and the development of rancidity as compared to dried fat emulsion products produced by the single-stage addition of the film former, even though the total amount of film forming material included in the dried emulsion product is the same in both cases. That is, when only about one-half of the amount of hydrophilic film forming material usually used in preparing a dried emulsion product by prior procedures is used in preparing the liquid emulsion concentrate, and the remaining one-half of the film former is added after the emulsion has been formed, the dried emulsion product resulting from the two stage addition of the film forming material has significantly greater resistance to oxidation at elevated temperatures than the product obtained when all of the film forming material is included at the time the emulsion is formed. Of course, the amount of film forming material included in the aqueous dispersion prior to formation of the emulsion must be sufficient to provide a continuous film encapsulating the fat globules in the emulsion.

Other edible ingredients usually used in the production of dried fat emulsion products may, if desired, also be included in the liquid emulsion concentrate, such as, for example, stabilizers, stabilizing salts, coloring, flavoring, preservatives, vitamins, minerals, depending on the intended use of the dried fat emulsion. The dried fat emulsion product may be characterized as comprising a matrix of water soluble constituents having as the dispersed phase therein discrete small particles of fat.

In accordance with the present invention, an aqueous dispersion is formed by mixing together an edible fat, a hydrophilic film forming material, and a carbohydrate, preferably a disaccharide, with sufficient water to provide the dispersion with a solids content in the range of 25% to 75%. Generally, any of the edible fats and oils, of both animal or vegetable source, normally used in dried fat emulsion products may be used. Fats and oils which may be used include unhydrogenated, partially or fully hydrogenated vegetable fats and oils such as, for example, cottonseed oil, coconut oil, corn oil, soybean oil, peanut oil, sunflower oil, palm kernel oil, including mixtures thereof, as well as tallow, lard, butterfat, having the flavor, melting point range, saponification value and other characteristics desired in the product in which the dried fat emulsion is to be used. The fat comprises the major solids component of the aqueous dispersion and may comprise up to 80% by weight of the solids content of the dispersion. If the fat used is solid or semi-solid at room temperature, it is melted prior to use in forming the aqueous dispersion.

The hydrophilic film forming material which may be used in the aqueous dispersion includes any of the edible film forming materials well known in the art as encapsulating agents in the production of dried emulsion products. Suitable materials have the properties of good film forming capability on oily surfaces, low hygroscopicity, low viscosity, and preferably, emulsion stabilizing properties so that a separate emulsifying agent need not be included in the aqueous dispersion. Examples of suitable film forming substances include proteinaceous hydrophilic colloids such as sodium or calcium caseinate, whey solids, non-fat milk solids, gelatin, hydrocolloid gums such as gum arabic, gum tragacanth, guar gum, carboxymethylcellulose, methylcellulose, gelatinized starch, dextrins and chemically modified dextrinized starches. In general, it is preferred to use sodium caseinate, gum arabic and/or chemically modified dextrinized starches as the film forming material in the present invention, for such materials have all of the properties set forth above, including good emulsion stabilizing properties, so that a separate emulsifier need not be included in the aqueous dispersion.

The amount of film forming material included in the aqueous dispersion should be sufficient to provide a continuous film encapsulating the fat globules in the emulsion. This amount will depend on the specific film former used, the amount of fat in the aqueous emulsion, and the desired size of the fat globules in the dried emulsion product. Thus, any ratio of fat to film former is suitable which will result in the formation of a stable emulsion in which the fat globules are encapsulated with a continuous film of the film forming material. As the ratio is increased, a point is reached where a stable emulsion cannot be formed because of the lack of an adequate amount of film former, resulting in coalescence, agglomeration and rising to the surface (creaming) of the fat particles prior to drying of the emulsion concentrate. This point will vary according to the film former used. For example, with a sodium caseinate-butterfat system, a fat to sodium caseinate ratio of 15 to 1 in the aqueous dispersion appears to be the upper limit in providing a stable emulsion. Although this limit cannot be set forth for every conceivable system, it can be readily determined in a given system by slowly increasing the ratio until a stable emulsion can no longer be formed. The lower limit of this ratio is controlled only by cost considerations and the desired size of the fat globules in the emulsion. That is, as the ratio is decreased, the size of the fat globules decreases. The fat globules in the emulsion preferably have an average particle size of less than 10 $\mu$m (microns). In general, it is preferred that the fat to film former ratio in the aqueous dispersion be in the range of 2:1 to 20:1. When sodium caseinate is used as the film forming material in both stages, it is preferred that the ratio of fat to caseinate in the aqueous dispersion be in range of 5:1 to 15:1, with an equivalent amount being added to the liquid emulsion concentrate after formation of the emulsion.

If the film forming agent used does not have good emulsifying properties, a conventional emulsifier may be added to the aqueous dispersion to increase the ease of formation of the emulsion and to promote stability of the liquid emulsion concentrate to be dried. Emulsifiers which may be used are those which are approved for use in foods, such as mono- and diglycerides, glycerol mono-stearates, sorbitan esters of hexitol anhydrides, polyoxyethylene sorbitan esters of hexitol anhydrides, and combinations thereof. If an emulsifier is used, it is typically present in an amount of 0.2% to 2.0% by weight of the solids content of the emulsion concentrate.

A carbohydrate material, preferably a disaccharide, such as sucrose, lactose, maltose, and mixtures thereof, is included in the aqueous dispersion in an amount of from 3% to 35% by weight of the solids content of the aqueous dispersion in order to promote emulsion stability of the dried fat emulsion product.

Other edible materials usually used in the production of dried fat emulsion products for nutritive or organoleptic purposes, such as, for example, coloring, flavoring, vitamins, minerals, preservatives anti-foaming agents may if desired, also be included in the aqueous dispersion. If used, such materials are usually present in small amounts.

In preparing the aqueous dispersion, the fat is melted (if a solid or semi-solid fat is used) by heating to 55°C. to 65°C., and is added, with vigorous agitation, to hot water (65°C.-90°C.) in which the film forming material has been dispersed. The disaccharide is then added with agitation. If an emulsifier is used, it is usually added to the liquified fat. The amount of water is controlled to provide the aqueous dispersion with a solids content of 25% to 75% by weight. The aqueous dispersion is then homogenized to an extent sufficient to provide an oil-in-water emulsion in which the fat globules have a desired particle size distribution, such as by homogenizing at 140 to 210 Kg. per sq. cm. total pressure in a conventional two-stage homogenizer, with the fat globules in the emulsion being encapsulated in a layer of the film forming material.

After formation of the liquid emulsion concentrate, an additional quantity of hydrophilic film forming material is incorporated in the emulsion either prior to, during or subsequent to drying of the emulsion concentrate. The film forming material used in this second addition may be any of the film formers disclosed hereinabove, and may be the same as or different than the film former used in preparing the aqueous dispersion. The amount of film forming material in this second addition is substantially equivalent to the amount of film former contained in the aqueous dispersion. It is believed that this second addition of film forming material provides a second layer of film former encapsulating the fat globules which further protects the fat globules from oxidation, light, humidity and other deleterious conditions in storage. Such double encapsulated fat emulsion products exhibit better resistance to oxidation, particularly at elevated temperatures, than similar products prepared using an equivalent amount of film former in which all of the film forming material is added in a single step.

Thus, the second portion of the film forming material may be dispersed in a suitable quantity of water and added, with agitation, to the liquid emulsion concentrate, at any point prior to drying of the emulsion concentrate. Alternatively, the liquid emulsion concentrate may be dried, such as by spray drying, and the dried emulsion product instantized using water in which the second portion of the film former has been dispersed to wet the powder.

The dried emulsion product of this invention may be used in the production of any of the dry food systems in which dried emulsion products have been used in the past, such as, for example, dry cake mixes, powdered shortenings, dried coffee whiteners, topping mixes, sauce mixes, dried beverage mixes, and the like. Such products, when containing the dried emulsion product of the present invention, have improved resistance to oxidation and the development of rancidity, particularly at elevated temperatures.

The following specific examples are intended to illustrate more fully the present invention. As used herein, all percentages, parts, ratios and proportions are by weight and all temperatures are in °C. unless otherwise stated.

Example 1

A dried fat emulsion product having the following formulation was prepared.

| Ingredient | Percent |
|---|---|
| Fat (butterfat) | 75.0 |
| Sodium Caseinate | 15.0 |
| Lactose, crystalline | 10.0 |

In preparing the dried emulsion from these ingredients, one-half of the sodium caseinate (i.e. 7.5g) was added to 92.5g of hot water (83°C.) and mixed well in a Waring blender. The fat was melted and added at a temperature of 60°C., with vigorous agitation, to the sodium caseinate dispersion, after which the lactose was added and the aqueous dispersion mixed until homogeneous. The resulting dispersion was then homogenized in a conventional two-stage homogenizer at 175 Kg./sq.cm. and 35 Kg./sq.cm. for the first and second stages respectively to form a liquid emulsion concentrate having a solids content of 50%. Since sodium caseinate has good emulsifying properties in addition to encapsulating and film forming capability, it was not necessary to include a separate emulsifying agent in the aqueous dispersion. The liquid emulsion concentrate was then pumped to a Bowen spray drier for drying. Just prior to introduction of the emulsion concentrate to the spray dryer nozzles, a dispersion of 7.5g sodium caseinate in 92.5g hot water (83°C.) was added to the liquid emulsion concentrate in a 1:1 ratio, and the resulting emulsion was spray dried to produce a dried fat emulsion having a moisture content of less than about 3%. The dried emulsion was characterized as comprising a matrix of water soluble constituents having as the dispersed phase therein discrete small globules of fat, with the fat having been encapsulated in two stages.

Example 2

A dried fat emulsion product was prepared in accordance with the two-stage encapsulation process of the present invention and the properties of the product compared to those of a dried fat emulsion prepared by conventional single-stage encapsulation procedures. That is, a dried fat emulsion was prepared using the ingredients, amounts and procedure set out in Example 1, with the single exception that corn oil, rather than butterfat, was used as the fat component. The product produced by this two-stage encapsulation process was identified as Product A. Another dried emulsion product (Product B) was prepared using the same ingredients (i.e. corn oil, sodium caseinate, lactose and water) in the same amounts and the same procedure, with the exception that all of the sodium caseinate (15g) was added to the aqueous dispersion in a single step prior to formation of the emulsion. The oxidative stability of the dried products as well as that of unencapsulated corn oil (Product C) was then determined by the following test procedure.

A 10g sample of the dried emulsion product was introduced into a 500 ml flat bottom jar capped with a rubber septa, with glass cotton being used to disperse the product throughout the jar and maximize its exposure to oxygen. The jars were stored at 45°C., 50°C. and 60°C., and the headspace oxygen was determined for each jar by gas chromatography at two week intervals to determine the half-life of headspace oxygen in each jar, that is, the time required for the headspace oxygen in each jar to be reduced to 10.5% (half the original concentration). The results of this measurement are set out below in Table 1.

### Table 1

| Product | Half-life (weeks) | | |
|---------|-------|-------|-------|
| Tested | 45°C. | 50°C. | 60°C. |
| A | 11 | 6.5 | 2.5 |
| B | 11 | 5.5 | 2.0 |
| C | 4.5 | 2.0 | 0.5 |

These test results show that the dried emulsion product produced in accordance with the two-stage encapsulation process of this invention has improved resistance to oxidation at elevated temperatures.

The particle size of Products A and B were determined using a Nicomp 270 Submicron Particle Sizer. Product B (the single-stage encapsulated product) had a bimodal particle diameter size distribution peaking at 600 and 140 nanometers, while Product A (the two-stage encapsulated product) had the same distribution with peaks at 1,125 and 240 nanometers.

### Example 3

A dried fat emulsion product having the following formulation was prepared

| Ingredient | Percent |
|-----------|---------|
| Fat (butterfat) | 80.0 |
| Sodium Caseinate | 10.7 |
| Lactose | 9.3 |

The procedure set out in Example 1 was used in preparing this product. That is, one-half (5.35g) of the sodium caseinate was included in an aqueous dispersion containing the fat, lactose and sufficient water to provide a liquid emulsion concentrate having a solids content of 50% by weight. The remaining 5.35g of sodium caseinate was dispersed in water and added to the emulsion prior to spray drying. The dried fat emulsion had excellent resistance to oxidation at elevated storage temperatures.

### Example 4

Five samples of dried fat emulsion products were prepared and evaluated using gas chromatography to determine the differences in the extent of oxidation between the products. All of the samples were prepared using a formulation containing 75.0g corn oil, 15.0g film forming material, and 10.0g lactose. Product samples D, E and F were prepared using the two-stage encapsulation procedure of Example 1. In preparing sample D, gum arabic was used as the film forming material, with 7.5g of gum arabic being included in the aqueous dispersion, and 7.5g being added to the emulsion prior to spray drying. Sample E was prepared using sodium caseinate as the film forming material, with the caseinate being added in two stages of 7.5 g in each stage in accordance with the procedure of Example 1. Sample F was prepared by including 7.5g sodium caseinate in the aqueous dispersion, and adding 7.5g gum arabic to the emulsion concentrate prior to spray drying. Product samples G and H were prepared by a single stage encapsulation method in which all of the film former was included in the aqueous dispersion. That is, in sample G, 15g of sodium caseinate was added to the dispersion, and in Sample H, 15g of gum arabic was included in the aqueous dispersion.

The spray dried emulsion concentrates of each sample were evaluated by gas chromatography to determine the extent of oxidation of the samples. That is, 5g of the sample being evaluated were purged using a Tekmar 4000 Headspace Concentrator. The samples were purged with helium (zero grade) at a flow rate of 80 ml/min. for 20 minutes at 75°C. The flavor volatiles were trapped on a Tenax porous polymer trap. After completion of the purge cycle, the carrier gas (ultrapure hydrogen) transferred the compounds onto the head of a DB-5 fused silica column held in a Hewlett-Packard 5890 gas chromatograph. During a 5 minute desorb cycle the column was held at -20°C. After that time, the oven temperature was ramped to 200°C. at the rate of 8°C. per minute. Components eluting from the column were detected by flame ionization and the total volatiles eluted from the column for each sample was determined by calculating the total peak area of the gas chromatographic profile for each example. The results of these tests are set out in Table 2.

## Table 2

| Product Sample | Film Forming Material(s) | Total Volatiles |
|---|---|---|
| D | gum arabic/gum arabic | 60,424,800 |
| E | sodium caseinate/ sodium caseinate | 75,256,100 |
| F | sodium caseinate/ gum arabic | 78,363,400 |
| G | sodium caseinate | 209,199,700 |
| H | gum arabic | 76,017,400 |

Since an increase in volatiles eluting from the column is indicative of increased fat oxidization, it is apparent that the two-stage encapsulation process of this invention provides increased resistance to oxidation. For example, Sample E (two-stage addition of sodium caseinate) had about 64% less volatiles than Sample G (one-stage addition of the same total amount of sodium caseinate), and Sample D (two-stage addition of gum arabic) had about 20% less volatiles than Sample H (one-stage addition of the same amount of gum arabic).

## Claims

1. The method of producing a dried fat emulsion product having long term stability against oxidation which comprises

emulsifying an aqueous dispersion containing an edible fat, a hydrophilic film forming material, a carbohydrate and water to form a stable liquid emulsion concentrate containing fat globules encapsulated with said film forming material and drying said emulsion concentrate to provide a dried fat emulsion product, characterised in that before drying a hydrophilic film forming material is added to said liquid emulsion concentrate in an amount substantially equal to that contained in the aqueous dispersion.

2. The method defined in claim 1 in which the amount of film forming material included in the aqueous dispersion is sufficient to provide a continuous film encapsulating the fat globules.

3. The method defined in claim 1 in which the aqueous dispersion contains a ratio of fat to film forming material in the range of between 2:1 to 20:1.

4. The method defined in claim 1 in which the fat comprises the major component of the solids content of the aqueous dispersion.

5. The method defined in claims 1 in which the film forming material is selected from the group consisting of proteinaceous hydrophilic colloids, hydrocolloid gums, gelatinized starch, dextrins and chemically modified dextrinized starches.

6. The method defined in claim 1 in which the film forming material added to the liquid emulsion concentrate is the same film forming material included in the aqueous dispersion.

7. The method defined in claim 1 in which the film forming material added to the liquid emulsion concentrate is different than the film forming material included in the aqueous dispersion.

8. The method defined in claim 5 in which the film forming material is selected from the group consisting of caseinates, gum arabic, chemically modified dextrinized starches, and combinations thereof.

9. The method defined in claim 8 in which the film forming material is sodium caseinate and is present in the aqueous dispersion in a ratio of fat to sodium caseinate of 5:1 to 15:1.

10. The method defined in claim 1 in which the carbohydrate is a disaccharide which is present in an amount of from 3% to 35% by weight of the solids content of the aqueous dispersion.

11. The method defined in claim 1 in which the fat globules in the liquid emulsion concentrate have an average particle size of less than $10\mu m$ (microns).

12. The method defined in claim 1 in which the liquid emulsion concentrate has a solids content of 25% to 75% by weight.

13. The method defined in claim 1 in which the aqueous dispersion contains an emulsifying agent.

14. The method of producing a dried fat emulsion product having long term stability against oxidation which comprises

forming an aqueous dispersion containing an edible fat, a hydrophilic film forming material, a carbohydrate and sufficient water to provide an aqueous dispersion having a solids content of between 25% to 75% by weight,

emulsifying said aqueous dispersion to form a stable liquid emulsion concentrate containing fat globules encapsulated with said film forming material,

drying said liquid emulsion concentrate to form a dried fat emulsion in which the fat globules have an average particle size of less than $10\mu m$ (microns), and

instantizing the dried fat emulsion particles with an aqueous medium containing an amount of the hydrophilic film forming material substantially equal to that contained in the aqueous dispersion.

15. The product produced by the method of claim 1.

**Patentansprüche**

1. Verfahren zur Herstellung eines Fett-Trockenemulsionsproduktes mit Langzeitoxidationsbeständigkeit, welches Verfahren ein:
Emulgieren einer wässerigen Dispersion, welche ein Speisefett, ein hydrophile filmbildendes Material, ein Kohlenhydrat und Wasser enthält, unter Ausbildung eines stabilen, flüssigen Emulsionskonzentrates, welches mit dem filmbildenden Material eingekapselte Fettkügelchen enthält, und ein Trocknen dieses Emulsionskonzentrates unter Bildung eines Fett-Trockenemulsionsproduktes umfaßt,
dadurch gekennzeichnet, daß vor dem Trocknen ein hydrophiles filmbildendes Material zu dem flüssigen Emulsionskonzentrat in einer Menge zugesetzt wird, welche im wesentlichen gleich jener Menge ist, die in der wässerigen Dispersion enthalten ist.

2. Verfahren nach Anspruch 1, wobei die Menge des in die wässerige Dispersion eingebrachten filmbildenden Materials zur Bildung eines kontinuierlichen, die Fettkügelchen einkapselnden Films ausreicht.

3. Verfahren nach Anspruch 1, wobei die wässerige Dispersion das Fett und das filmbildende Material in einem Verhältnis zueinander in einem Bereich von 2:1 bis 20:1 enthält.

**4.** Verfahren nach Anspruch 1, wobei das Fett die Hauptkomponente des Feststoffgehaltes der wässerigen Dispersion ausmacht.

**5.** Verfahren nach Anspruch 1, wobei das filmbildende Material aus einer Gruppe ausgewählt ist, die aus proteinartigen, hydrophilen Kolloiden, Hydrokolloid-Gummen, gelatinierter Stärke, Dextrinen und chemisch modifizierten, in Dextrin umgewandelten Stärken besteht.

**6.** Verfahren nach Anspruch 1, wobei das zu dem flüssigen Emulsionskonzentrat zugegebene filmbildende Material das gleiche filmbildende Material wie jenes ist, welches in der wässerigen Dispersion enthalten ist.

**7.** Verfahren nach Anspruch 1, wobei sich das zu dem flüssigen Emulsionskonzentrat zugegebene filmbildende Material von dem filmbildenden Material unterscheidet, welches in der wässerigen Dispersion enthalten ist.

**8.** Verfahren nach Anspruch 5, wobei das filmbildende Material aus einer Gruppe ausgewählt wird, die aus Caseinaten, Gummiarabikum, chemisch modifizierten, in Dextrin umgewandelten Stärken und Kombinationen hievon besteht.

**9.** Verfahren nach Anspruch 8, wobei das filmbildende Material Natriumcaseinat ist und in der wässerigen Dispersion in einem Verhältnis zwischen dem Fett und dem Natriumcaseinat von 5:1 bis 15:1 vorliegt.

**10.** Verfahren nach Anspruch 1, wobei das Kohlenhydrat ein Disaccharid ist, welches in einer Menge von 3 Gew.-% bis 35 Gew.-% des Feststoffgehaltes der wässerigen Dispersion vorliegt.

**11.** Verfahren nach Anspruch 1, wobei die Fettkügelchen in dem flüssigen Emulsionskonzentrat eine durchschnittliche Teilchengröße von weniger als 10 μm aufweisen.

**12.** Verfahren nach Anspruch 1, wobei das flüssige Emulsionskonzentrat einen Feststoffgehalt von 25 Gew.-% bis 75 Gew.-% aufweist.

**13.** Verfahren nach Anspruch 1, wobei die wässerige Dispersion einen Emulgator enthält.

**14.** Verfahren zur Herstellung eines Fett-Trockenemulsionsproduktes mit Lanzeitoxidationsbeständigkeit, welches Verfahren ein:
Ausbilden einer wässerigen Dispersion, welche ein Speisefett, ein hydrophiles filmbildendes Material, ein Kohlenhydrat und genügend Wasser zur Bildung einer wässerigen Dispersion enthält, welche einen Feststoffgehalt von 25 Gew.-% bis 45 Gew.-% aufweist,
Emulgieren der wässerigen Dispersion unter Bildung eines stabilen, flüssigen Emulsionskonzentrates, welches mit dem filmbildenden Material eingekapselte Fettkügelchen enthält,
Trocknen des flüssigen Emulsionskonzentrates unter Bildung einer Fett-Trockenemulsion, in welcher die Fettkügelchen eine mittlere Teilchengröße von weniger als 10 μm aufweisen; und
Umwandeln der Teilchen der Fett-Trockenemulsion in ein Instantprodukt mit einem wässerigen Medium, welches eine Menge des hydrophilen filmbildenden Materials enthält, die im wesentlichen gleich der in der wässerigen Dispersion enthaltenen Menge ist,
umfaßt.

**15.** Produkt, welches nach dem Verfahren gemäß Anspruch 1 erzeugt worden ist.

**Revendications**

**1.** Procédé de production d'une émulsion sèche de matière grasse présentant une stabilité de longue durée contre l'oxydation, qui comprend
l'émulsionnement d'une dispersion aqueuse contenant une matière grasse comestible, d'une matière filmogène hydrophile, d'un glucide et d'eau pour former un concentré d'émulsion liquide stable contenant des globules de matière grasse encapsulés avec ladite matière filmogène, et le séchage dudit concentré d'émulsion pour produire une émulsion sèche de matière grasse, caractérisé en ce que, avant séchage, une matière filmogène hydrophile est ajoutée audit concentré d'émulsion liquide en une quantité pratiquement égale à celle présente dans la dispersion aqueuse.

2. Procédé suivant la revendication 1, dans lequel la quantité de matière filmogène incorporée à la dispersion aqueuse est suffisante pour produire un film continu encapsulant les globules de matière grasse.

3. Procédé suivant la revendication 1, dans lequel la dispersion aqueuse contient un rapport de la matière grasse à la matière filmogène compris dans l'intervalle de 2:1 à 20:1.

4. Procédé suivant la revendication 1, dans lequel la matière grasse comprend le constituant principal de la quantité de matières solides de la dispersion aqueuse.

5. Procédé suivant la revendication 1, dans lequel la matière filmogène est choisie dans le groupe comprenant des colloïdes hydrophiles protéiques, des gommes d'hydro-colloïdes, l'amidon gélatinisé, des dextrines et des amidons convertis en dextrine, modifiés chimiquement.

6. Procédé suivant la revendication 1, dans lequel la matière filmogène ajoutée au concentré d'émulsion liquide est la même que celle incorporée à la dispersion aqueuse.

7. Procédé suivant la revendication 1, dans lequel la matière filmogène ajoutée au concentré d'émulsion liquide est différente de la matière filmogène incorporée à la dispersion aqueuse.

8. Procédé suivant la revendication 5, dans lequel la matière filmogène est choisie dans le groupe consistant en caséinates, gomme arabique, amidons transformés en dextrine modifiés chimiquement et leurs associations.

9. Procédé suivant la revendication 8, dans lequel la matière filmogène est le caséinate de sodium et est présente dans la dispersion aqueuse en un rapport de la matière grasse au caséinate de sodium compris dans l'intervalle de 5:1 à 15:1.

10. Procédé suivant la revendication 1, dans lequel le glucide est un disaccharide qui est présent en une quantité de 3 % à 35 % en poids de la quantité de matières solides de la dispersion aqueuse.

11. Procédé suivant la revendication 1, dans lequel les globules de matière grasse dans le concentré d'émulsion liquide possèdent un diamètre moyen de particules inférieur à 10 μm (micromètres).

12. Procédé suivant la revendication 1, dans lequel le concentré d'émulsion liquide possède une teneur en matières solides de 25 % à 75 % en poids.

13. Procédé suivant la revendication 1, dans lequel la dispersion aqueuse contient un agent émulsionnant.

14. Procédé de production d'une émulsion sèche de matière grasse présentant une stabilité à long terme contre l'oxydation, qui comprend

la formation d'une dispersion aqueuse contenant une matière grasse comestible, une matière filmogène hydrophile, un glucide et une quantité d'eau suffisante pour produire une dispersion aqueuse ayant une teneur en matières solides de 25 % à 75 % en poids,

l'émulsionnement de ladite dispersion aqueuse pour former un concentré d'émulsion liquide stable contenant des globules de matière grasse encapsulés avec ladite matière filmogène,

le séchage dudit concentré d'émulsion liquide pour former une émulsion sèche de matière grasse dans laquelle les globules de matière grasse possèdent un diamètre moyen de particules inférieur à 10 μm (micromètres), et

l'instantanéisation des particules d'émulsion sèche de matière grasse avec un milieu aqueux contenant une quantité de la matière filmogène hydrophile pratiquement égale à celle présente dans la dispersion aqueuse.

15. Produit obtenu par mise en oeuvre du procédé suivant la revendication 1.